(19) Europäisches Patentamt
European Patent Office
Office européen des brevets

(11) EP 3 341 337 B1

(12) # EUROPEAN PATENT SPECIFICATION

(45) Date of publication and mention of the grant of the patent:
**12.08.2020 Bulletin 2020/33**

(21) Application number: **16762740.5**

(22) Date of filing: **22.08.2016**

(51) Int Cl.:
***C03C 25/32*** *(2018.01)* ***D04H 1/4209*** *(2012.01)*
***D04H 1/60*** *(2006.01)* ***D04H 1/64*** *(2012.01)*
***E04B 1/76*** *(2006.01)*

(86) International application number:
**PCT/EP2016/069831**

(87) International publication number:
**WO 2017/036843 (09.03.2017 Gazette 2017/10)**

(54) **MINERAL WOOL PRODUCT**

MINERALWOLLERZEUGNIS

PRODUIT DE LAINE MINÉRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2015 EP 15183051**

(43) Date of publication of application:
**04.07.2018 Bulletin 2018/27**

(73) Proprietor: **Rockwool International A/S**
**2640 Hedehusene (DK)**

(72) Inventors:
- **NISSEN, Povl**
  **3650 Olstykke (DK)**
- **HJELMGAARD, Thomas**
  **3480 Fredensborg (DK)**

(74) Representative: **Letzelter, Felix Phillip**
**Meissner Bolte Patentanwälte**
**Rechtsanwälte Partnerschaft mbB**
**Widenmayerstraße 47**
**80538 München (DE)**

(56) References cited:
**WO-A1-2009/019235** **WO-A1-2010/106181**
**WO-A1-2010/139899** **WO-A1-2011/044490**
**WO-A1-2013/179323** **WO-A1-2016/030343**
**WO-A1-2016/102444** **WO-A1-2016/102447**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of the Invention

The present invention relates to the use of a mineral wool product.

### Background of the Invention

Mineral wool products (also termed mineral fibre products) generally comprise man-made vitreous fibres (MMVF) such as, e.g., glass fibres, ceramic fibres, basalt fibres, slag fibres, mineral fibres and stone fibres (rock fibres), which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588. Another group of non-phenol-formaldehyde binders are the addition/-elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties in terms of curing speed and curing density. WO 2008/023032 discloses urea-modified binders of that type which provide mineral wool products having reduced moisture take-up. Other mineral wool products having a closer composition of those of the present application are disclosed in WO 2009/019235, WO 2011/044490, WO 2013/179323 and WO 2010/106181.

Since some of the starting materials used in the production of these binders are rather expensive chemicals, there is an ongoing need to provide formaldehyde-free binders which are economically produced.

A further effect in connection with previously known aqueous binder compositions for mineral fibres is that at least the majority of the starting materials used for the productions of these binders stem from fossil fuels. There is an ongoing trend of consumers to prefer products that are fully or at least partly produced from renewable materials and there is therefore a need to provide binders for mineral wool which are at least partly produced from renewable materials.

Mineral wool products have a specified maximum service temperature for their use. The maximum service temperature may for example be 250 deg. C following standard EN 14706 for a stone wool product of A1 fire class of standard EN 13501-1.

The mineral wool product may off-gas organic constituents when being used at temperatures near/above its maximum service temperature, especially when used for the first time at such temperatures and/or when used during brief time intervals at such temperatures.

There is an incentive to lower the off-gassing near the maximum service temperature of a mineral wool product.

### Summary of the Invention

Accordingly, it was an object of the present invention to provide the use of a mineral wool product which has improved high temperature use, where the mineral wool product economically produced and is using renewable materials as starting products for the preparation of the aqueous binder composition.

In accordance with the present invention, there is provided the use of a mineral wool product according to claim 1, wherein heating of the mineral wool product to a temperature of approximately 225°C off-gases less than 25 g VOC (Volatile Organic Content) per kg binder.

One measure of the emissions is the VOC content, Volatile Organic Content. The VOC is stated in grams of carbon (C), where the carbon originates from the various compounds constituting the Volatile Organic Content emission.

For the purpose of the present application the volatile organic content (VOC) of a mineral wool product shall be defined as follows:

The volatile organic content in a mineral wool product originates primarily from the organic mineral wool binder. When a product is subjected to heating and subsequent measuring with a Flame Ionisation Detector (FID) the result is a measure of the volatile organic content. This measure is taken as the volatile organic content (VOC), expressed in gram carbon, said carbon originating from the carbon-containing products detected by the FID at a temperature of approx. 180 °C.

For the purpose of the present application, the VOC can be measured according to the following protocol:

Tube Furnace testing

The principle of tube furnace testing is shown in figure 1:
Mineral wool products are tested in a tube furnace based upon the principles of ISO 19700 test procedure. The tube furnace (1) has a furnace length of 650 mm with an inner ceramic tube of 700 mm and an inner diameter of 30 mm. The quartz tube going through the oven has a length of 800 mm and an inner diameter of 22-23 mm.
The furnace is heated to the specified temperature.
The wool samples are crushed in order to provide a homogenous sample (2). A 250 mg sample is applied; the crushed mineral wool is weighed into a porcelain boat (3) and by means of a rod (4) placed in the middle of the quartz tube oven preheated to the decided temperature.
An air flow of 2 liter/ min of ambient atmospheric air is led over the sample and the resulting exhaust gasses from the sample measured by an FID.
In accordance with a second aspect of the present invention, there is provided a method of producing a mineral wool product as described above which comprises the steps of contacting the mineral fibres with a binder composition, and curing the binder composition.
In accordance with a third aspect of the present invention, there is provided a use of a mineral fiber product as described above at temperatures above 150°C, such as above 175 °C, such as above 200°C and below the maximum service temperature of 300 °C, such as 250°C.
The present inventors have surprisingly found that it is possible to obtain mineral wool products bound by an organic binder with a substantially lower amount of emissions compared to the prior art products, for example during the use of the products at high temperature. The temperature near the maximum service temperature of the mineral wool product is an example of a high temperature.
At the same time, the binders according to the present invention comprise carbohydrate which is a renewable material.
The present invention is directed to the use of a mineral wool product as described in claim 1 comprising mineral fibers bound by an organic formaldehyde-free binder comprising carbohydrate in its uncured state, wherein heating of the mineral wool product to a temperature of approximately 225 °C off-gases less than 25 g VOC (Volatile Organic Content) per kg binder.

Mineral wool product (mineral fibre product)

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a rock wool product or a glass wool product.
Suitable fibre formation methods and subsequent production steps for manufacturing the mineral fibre product are those conventional in the art. Generally, the binder is sprayed immediately after fibrillation of the mineral melt on to the air-borne mineral fibres. The aqueous binder composition is normally applied in an amount corresponding to an LOI of 0.1 to 18.0 %, preferably 0.3 to 12.0 %, more preferably 0.5 to 8.0 % by weight.
The spray-coated mineral fibre web is generally cured in a curing oven by means of a hot air stream. The hot air stream may be introduced into the mineral fibre web from below, or above or from alternating directions in distinctive zones in the length direction of the curing oven.
Typically, the curing oven is operated at a temperature of from about 150°C to about 350°C. Preferably, the curing temperature ranges from about 200°C to about 300°C. Generally, the curing oven residence time is from 30 seconds to 20 minutes, depending on, for instance, the product density.
If desired, the mineral wool web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use, for example, as thermal or acoustical insulation materials, construction materials, facade insulation, as filter stock, pipes, HVAC insulation, solar panels and in other applications.
In accordance with the present invention, it is also possible to produce composite materials by combining the bonded mineral fibre product with suitable composite layers or laminate layers such as, e.g., metal, glass surfacing mats and other woven or non-woven materials.
The mineral fibre products according to the present invention generally have a density within the range of from 6 to 250 kg/$m^3$, preferably 20 to 200 kg/$m^3$, more preferably 70-120 kg/ $m^3$. The mineral fibre products generally have a loss on ignition (LOI) within the range of 0.1 to 18.0 %, preferably 0.3 to 12.0 %, more preferably 0.5 to 8.0 % by weight.

Carbohydrate component of the organic binder

The mineral wool product according to the present invention is bound by an organic binder comprising carbohydrate.
In a preferred embodiment the binder comprises carbohydrate in its uncured state in a content of 70 to 95 wt.-% of the total binder component solids.
In a particular preferred embodiment, the binder comprises carbohydrate in its uncured state in a content of 86 to 95 wt.-% of the total binder component solids.
The binder may comprise carbohydrate in its uncured state in a content of 70 wt.-% or more, such as 75 wt.-% or more, such as 80 wt.-% or more, such as 86 wt.-% or more, of the total binder component solids. And the binder may comprise carbohydrate in its uncured state in a content of 97 wt.-% or less, such as 95 wt.-% or less, such 90 wt.-% or less of the total binder component solids.
In a further preferred embodiment, the mineral wool product according to the present invention is such that the binder comprises in its uncured state, a carbohydrate selected from the group consisting of hexose, such as dextrose, fructose, pentose such as xylose and/or sucrose, glucose syrup.
Preferably, the carbohydrate is selected from the group of dextrose and/or a glucose syrup with a Dextrose Equivalent (DE) value of 85 to 99.
In a further preferred embodiment, the carbohydrate is a glucose syrup with a Dextrose Equivalent (DE) value of 15 to 50.
In a further preferred embodiment, the carbohydrate is a carbohydrate with a Dextrose Equivalent (DE) value of 50 to 85.
Starch may be used as a raw material for various carbohydrates such as glucose syrups and dextrose. Depending on the reaction conditions employed in the hydrolysis of starch, a variety of mixtures of dextrose and intermediates is obtained which may be characterized by their DE number. DE is an abbreviation for Dextrose Equivalent and is defined as the content of reducing sugars, expressed as the number of grams of anhydrous D-glucose per 100 g of the dry matter in the sample, when determined by the method specified in International Standard ISO 5377-1981 (E). This method measures reducing end groups and attaches a DE of 100 to pure dextrose and a DE of 0 to pure starch.
In a preferred embodiment, the carbohydrate is selected from sucrose, reducing sugars, in particular dextrose, polycarbohydrates, and mixtures thereof, preferably dextrins and maltodextrins, more preferably glucose syrups, and more preferably glucose syrups with a dextrose equivalent value of DE = 15-99, such as DE = 50-85, such as DE = 15-50, such as DE = 60-99 such as DE = 85-99. The term "dextrose" as used in this application is defined to encompass glucose and the hydrates thereof.

Other components of the binder

The binders according to the present invention are formaldehyde free.
For the purpose of the present application, the term "formaldehyde free" is defined to characterise a mineral wool product where the emission is below 5 $\mu g/m^2/h$ of formaldehyde from the mineral wool product, preferably below 3 $\mu g/m^2/h$. Preferably the test is carried out in accordance with ISO 16000 for testing aldehyde emissions.
Preferably, the binder composition does not contain added formaldehyde.
In a preferred embodiment, the mineral wool product according to the present invention is such that the binder does not comprise, in its uncured state, a carboxylic acid, such as dicarboxylic acid.
Carboxylic acids may form part of the binders used for the products according to the invention. Preferably, carboxylic acids are not comprised in the binder composition, or substantially not comprised in the binder composition.
It is believed that the presence of carboxylic acids in binder compositions may increase the off-gassing at high temperature when the binder is used for mineral wool products. Preferably, this increase is not wanted for the products according to the present invention.
Preferably, the binders according to the present invention have a pH of 5.1-10, preferably pH of 6-9. In one embodiment the binder has a pH of 2 to 6.
The mineral wool products according to the present invention is such that the binder further comprises, in its uncured state:

a component (i) in the form of one or more compounds selected from

- compounds of the formula, and any salts thereof:

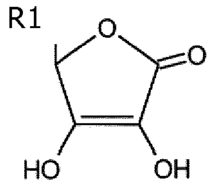

in which R1 corresponds to H, alkyl, monohydroxyalkyl, dihydroxyalkyl, polyhydroxyalkyl, alkylene, alkoxy, amine;

- compounds of the formula, and any salts thereof:

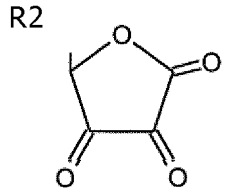

in which R2 corresponds to H, alkyl, monohydroxyalkyl, dihydroxyalkyl, polyhydroxyalkyl, alkylene, alkoxy, amine;

a component (ii) in the form of one or more compounds selected from the group of ammonia, amines or any salts thereof.

Preferably, alkyl is $C_1$-$C_{10}$ alkyl.
Preferably, monohydroxyalkyl is monohydroxy $C_1$-$C_{10}$ alkyl.
Preferably, dihydroxyalkyl is dihydroxy $C_1$-$C_{10}$ alkyl.
Preferably, polyhydroxyalkyl is polyhydroxy $C_1$-$C_{10}$ alkyl.
Preferably, alkylene is alkylene $C_1$-$C_{10}$ alkyl.
Preferably, alkoxy is alkoxy $C_1$-$C_{10}$ alkyl.
Preferably, component (i) is in the form of one or more components selected from ascorbic acid or isomers or salts or derivatives, preferably oxidized derivatives, thereof.
In a preferred embodiment, component (i) is selected from L-ascorbic acid, D-isoascorbic acid, 5,6-isopropylidene ascorbic acid, dehydroascorbic acid and/or any salt of the compounds, preferably calcium, sodium, potassium, magnesium or iron salts.
In a further preferred embodiment, component (i) is selected from L-ascorbic acid, D-isoascorbic acid, 5,6-isopropylidene ascorbic acid and dehydroascorbic acid.
In a preferred embodiment, the mineral wool product according to the present invention is such that the binder comprises, in its uncured state: a component (ii) in form of one or more compounds selected from the group consisting of ammonia and/or amines, such as piperazine, polyamine, such as hexamethylenediamine, m-xylylenediamine, diethylenetriamine, triethylenetetramine, tetraethylenepentamine, and/or monoethanolamine, diethanolamine, and/or triethanolamine.
In a preferred embodiment, the proportion of components (i), (ii) and carbohydrate is within the range of 1 to 50 weight-% component (i) based on the mass of component (i) and carbohydrate, 50 to 99 weight-% carbohydrate based on the mass of component (i) and carbohydrate, and 0.1 to 10.0 molar equivalents of component (ii) relative to component (i).
In alternative to comprise components (i) and (ii) the mineral wool product according to the present invention is such that the binder comprises, in its uncured state: a component (iii) in the form of one or more compounds selected from sulfamic acid, derivatives of sulfamic acid or any salt thereof.
In a preferred embodiment, component (iii) is selected from the group consisting of sulfamic acid and any salt thereof, such as ammonium sulfamate, calcium sulfamate, sodium sulfamate, potassium sulfamate, magnesium sulfamate, cobalt sulfamate, nickel sulfamate, N-cyclohexyl sulfamic acid and any salt thereof, such as sodium N-cyclohexyl sulfamate.
In a particularly preferred embodiment, component (iii) is ammonium sulfamate. In a preferred embodiment, the aqueous binder composition according to the present invention comprises glucose syrup having a DE of 60 to less than 100, in particular of 60 to 99, more particular 85 to 99 and a component (iii) in form of sulfamic acid and/or its salts,

preferably ammonium sulfamate and/or N-cyclohexyl sulfamic acid and/or its salts.

In a preferred embodiment, the proportion of carbohydrate and (iii) is within the range of 0.5-15 wt.-%, in particular 1-12 wt.-%, more particular 2-10 wt.-% component (iii), based on the mass of carbohydrate.

In a particularly preferred embodiment, the component (iii) is in form of N-cyclohexyl sulfamic acid and any salt thereof and the proportion of carbohydrate and component (iii) in form of N-cyclohexyl sulfamic acid and any salt thereof is within the range of 0.5-20 wt.-%, in particular 1-15 wt.-%, more particular 2-10 wt.-% component (iii), based on the mass of carbohydrate.

In a preferred embodiment, the mineral wool product according to the present invention is such that the binder further comprises, in its uncured state, urea preferably in an amount of 0 to 40 weight-% urea, preferably 0 to 20 weight-% urea, based on the mass of components (i) and/or (iii), and carbohydrate.

In a preferred embodiment, the mineral wool product according to the present invention is such that the binder further comprises, in its uncured state hypophosphorous acid or any salts thereof.

In a particularly preferred embodiment, the hypophosphorous acid or salts thereof, preferably the sodium salt of hypophosphorous acid is present in an amount of 0.05 to 10 weight-%, such as 1 to 7 weight-%, based on the mass of component (i), and carbohydrate, whereby component (ii) is preferably present in the amount of 0.1 to 10 molar equivalents of component (ii) relative to the combined molar equivalents of component (i) and hypophosphorous acid.

In a preferred embodiment, the mineral wool product according to the present invention is such that the binder comprises, in its uncured state, component (i) in the form of ascorbic acid; component (ii) in the form of ammonia; carbohydrate in the form of dextrose and/or a glucose syrup with a DE of 60-99; component (iii) in the form of sulfamic acid and/or its salts, preferably ammonium sulfamate; and hypophosphorous acid and/or its salts, preferably ammonium hypophosphite.

In a preferred embodiment, the mineral wool product according to the present invention is such that the binder further comprises in its uncured state, a further component, which is in form of one or more reactive or non-reactive silicones.

In a preferred embodiment, the one or more reactive or non-reactive silicones is selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition and is preferably present in an amount of 0.1 to 15 weight-%, preferably 0.1 to 10 weight-%, more preferably 0.3 to 8 weight-%, based on the binder solids.

Further components of the binder composition

Optionally, the aqueous binder composition according to the present invention can contain further components besides the components mentioned above. However, in a preferred embodiment >95 weight-% of the total solids content of the composition is formed by carbohydrate, component (i), component (ii), component (iii), hypophosphorous acid or salts thereof and urea based on the binder component solids content.

In other words, any further components, if present, are present preferably in an amount of <5 weight-% of the total binder component solids content of the binder composition.

Method of producing the mineral wool product

A method of producing a mineral wool product as described above comprises the steps of contacting the mineral fibres with a binder composition, and curing the binder composition.

Use of the mineral fiber product

The present invention is directed to a use of a mineral fiber product as described above at temperatures above 150 °C, such as above 175 °C, such as above 200 °C and below the maximum service temperature of 300 °C, such as 250 °C.

The following examples are intended to further illustrate the invention without limiting its scope.

## Examples

The binders were used by spraying the binder solutions through nozzles near a cascade rotor apparatus into the formed cloud of fibres in the forming chamber. The coated fibres were collected on transport conveyors and transferred into a curing oven for a curing time of 5-15 minutes at a curing temperature in the interval of 250°C to 280°C.

The products shown in Table 1 and Figure 2 were tested for loss on ignition (LOI) and VOC emissions after

homogenization of the sample.

**VOC**

The results of the evaluation of the products according to the present invention and the products with binders according to the prior art are summarized in Table 1. The products were measured as described in the following.

The mineral wool products were tested in a tube furnace based upon the principle in the ISO 19700 test procedure. The tube furnace had a furnace length of 650 mm with an inner ceramic tube of 700 mm and an inner diameter of 30 mm. The quartz tube going through the oven had a length of 800 mm and an inner diameter of 22-23 mm.

The furnace was heated to the specified temperature.

A range of temperatures were tested, as depicted in Figure 2.

The mineral wool products were crushed in order to provide a homogenous sample. A 250 mg sample was applied; the crushed mineral wool was weighed into a porcelain boat and by means of a rod placed in the middle of the quartz tube oven preheated to the decided temperature.

An air flow of 2 liter/ min of ambient atmospheric air was led over the sample and the resulting exhaust gasses from the sample measured by a Flame Ionisation Detector (FID) supplied from the company Ersatec.

The binders used in the test production are further described in the following.

The amounts of reactants used in the mineral wool production tests were scaled up from the amounts given in the Binder Examples below.

**Binder component solids content**

The content of each of the components in a given binder solution before curing is based on the anhydrous mass of the components.

**Binder solids**

The content of binder after curing is termed "binder solids".

Disc-shaped stone wool samples (diameter: 5 cm; height 1 cm) were cut out of stone wool and heat-treated at 580 °C for at least 30 minutes to remove all organics.

The binder solids of a given binder solution was measured by distributing two samples of the binder solution (each approx. 2.0 g) onto two of the heat treated stone wool discs which were weighed before and after application of the binder solution.

The binder loaded stone wool discs were then heated at 200 °C for 1 hour. After cooling and storing at room temperature for 10 minutes, the samples were weighed and the binder solids was calculated as an average of the two results. A binder with a desired binder solids could then be produced by diluting with the required amount of water or water and 10% aq. silane (Momentive VS-142).

The glucose syrup used has a DE-value of 95 to less than 100 (C*sweet D02767 ex Cargill).

**Binder example** 1 (not according to the invention)

A mixture of 75.1% aq. glucose syrup (20.0 g; thus efficiently 15.0 g glucose syrup), ammonium sulfamate (0.75 g, 6.57 mmol) and urea (1.50 g) in water (35.0 g) was stirred at room temperature until a clear solution was obtained (pH 4.4). 28% aq. ammonia (0.035 g; thus efficiently 0.01 g, 0.58 mmol ammonia) was then added dropwise until pH = 8.0. The binder solids was then measured (21.1 wt.%).

Silane was added in an amount corresponding to 1% of solids

The other binders mentioned in Table 1 were prepared in a manner analogous to the preparation shown above.

**Binder example 2**

A mixture of L-ascorbic acid (1.50 g, 8.52 mmol) and 75.1% aq. glucose syrup (18.0 g; thus efficiently 13.5 g glucose syrup) and urea (0.75 g) in water (30.5 g) was stirred at room temperature until a clear solution was obtained.

50% aq. hypophosphorous acid (0.60 15 g; thus efficiently 0.30 g, 4.55 mmol hypophosphorous acid) was then added (pH 1.3). 28% aq. ammonia (0.99 g; thus efficiently 0.28 g, 16.3 mmol ammonia) was then added dropwise until pH = 6.7. The binder solids was then measured (20.1 wt.%).

Silane was added in an amount corresponding to 1% of solids.

**Binder example, reference binder A**

This binder is based on alkanolamine-polycarboxylic acid anhydride reaction products.

Diethanolamine (DEA, 120.5 g) is placed in a 5-litre glass reactor provided with a stirrer and a heating/cooling jacket. The temperature of the diethanolamine is raised to 60 °C where after tetrahydrophthalic anhydride (THPA, 67.1 g) is added. After raising the temperature and keeping it at 130 °C, a second portion of tetrahydrophthalic anhydride (33.6 g) is added followed by trimellitic anhydride (TMA, 67.1 g). After reacting at 130 °C for 1 hour, the mixture is cooled to 95 °C. Water (241.7 g) is added and stirring is continued for 1 hour. Urea (216.1 g) is then added and stirring is continued until all solids are dissolved. After cooling to ambient temperature, the mixture is poured into water (3.32 kg) and 50% aq. hypophosphorous acid (5.0 g) and 25% aq. ammonia (56.3 g) are added under stirring.

Glucose syrup (1.24 kg) is heated to 60 °C and then added under stirring followed by 50% aq. silane (Momentive VS-142) (5.0 g).

**Binder example, reference binder B**

This binder is a phenol-formaldehyde resin modified with urea, a PUF-resol.

A phenol-formaldehyde resin is prepared by reacting 37% aq. formaldehyde (606 g) and phenol (189 g) in the presence of 46% aq. potassium hydroxide (25.5 g) at a reaction temperature of 84°C preceded by a heating rate of approximately 1°C per minute. The reaction is continued at 84 °C until the acid tolerance of the resin is 4 and most of the phenol is converted. Urea (241 g) is then added and the mixture is cooled.

The acid tolerance (AT) expresses the number of times a given volume of a binder can be diluted with acid without the mixture becoming cloudy (the binder precipitates). Sulfuric acid is used to determine the stop criterion in a binder production and an acid tolerance lower than 4 indicates the end of the binder reaction.

To measure the AT, a titrant is produced from diluting 2.5 ml conc. sulfuric acid (>99 %) with 1 L ion exchanged water. 5 mL of the binder to be investigated is then titrated at room temperature with this titrant while keeping the binder in motion by manually shaking it; if preferred, use a magnetic stirrer and a magnetic stick. Titration is continued until a slight cloud appears in the binder, which does not disappear when the binder is shaken.

The acid tolerance (AT) is calculated by dividing the amount of acid used for the titration (mL) with the amount of sample (mL):

$$AT=(\text{Used titration volume (mL)}) / (\text{Sample volume (mL)})$$

Using the urea-modified phenol-formaldehyde resin obtained, a binder is made by addition of 25% aq. ammonia (90 mL) and ammonium sulfate (13.2 g) followed by water (1.30 kg).

Figure 2 shows the VOC of mineral wool products according to the present invention in relation to the VOC of mineral wool products according to the prior art at several temperatures. As can be seen in Figure 2, the inventive examples show considerably less VOC off-gassing when comparing to the mineral wool products according to the prior art.

Table 1

| Binder | Loss on Ignition | g C/kg binder at 225°C |
|---|---|---|
| 1 sulfamate-dextrose | 3,6 | 10 |
| 2 ascorbic acid-dextrose, | 3,8 3,4 | 12 15 |
| A (reference) alkanolamine-polycarboxylic acid anhydride reaction products | 4,2 | 82 |
| B (reference) phenol-formaldehyde with urea | 6,5 | 56 |

## Claims

1. Use of a mineral fiber product comprising mineral fibers bound by an organic formaldehyde-free binder comprising carbohydrate in its uncured state, wherein heating of the mineral wool product to a temperature of approximately 225 °C off-gases less than 25 g VOC (Volatile Organic Content) per kg binder,
wherein the binder further comprises, in its uncured state:

a component (i) in the form of one or more compounds selected from

- compounds of the formula, and any salts thereof:

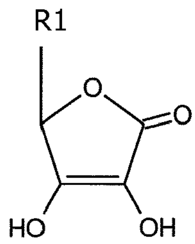

in which R1 corresponds to H, alkyl, monohydroxyalkyl, dihydroxyalkyl, polyhydroxyalkyl, alkylene, alkoxy, amine;

- compounds of the formula, and any salts thereof:

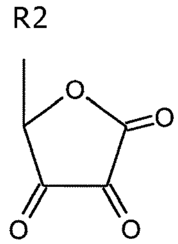

in which R2 corresponds to H, alkyl, monohydroxyalkyl, dihydroxyalkyl, polyhydroxyalkyl, alkylene, alkoxy, amine;

a component (ii) in the form of one or more compounds selected from the group of ammonia, amines or any salts thereof;
and/or
wherein the binder further comprises, in its uncured state: a component (iii) in the form of one or more compounds selected from sulfamic acid, derivatives of sulfamic acid or any salt thereof,
at temperatures above 150 °C, such as above 175 °C, such as above 200 °C and below the maximum service temperature of 300 °C, such as 250 °C.

**2.** Use of a mineral fiber product according to claim 1, wherein the binder comprises carbohydrate in its uncured state in a content of 70 to 95 wt.% of the total binder component solids.

**3.** Use of a mineral fiber product according to claim 1, wherein the binder comprises carbohydrate in its uncured state in a content of 86 to 95 wt.% of the total binder component solids.

**4.** Use of a mineral fiber product according to any of the preceding claims, wherein the carbohydrate is selected from the group consisting of hexose, such as dextrose, fructose, pentose such as xylose and/or sucrose, glucose syrup.

**5.** Use of a mineral fiber product according to any of the preceding claims, wherein the carbohydrate is selected from the group of dextrose and/or a glucose syrup with a Dextrose Equivalent (DE) value of 85 to 99.

**6.** Use of a mineral fiber product according to claim 1-4, wherein the carbohydrate is a glucose syrup with a Dextrose Equivalent (DE) value of 15 to 50.

**7.** Use of a mineral fiber product according to any of claims 1 to 4, wherein the carbohydrate is a carbohydrate with a Dextrose Equivalent (DE) value of 50 to 85.

**8.** Use of a mineral fiber product according to any of the preceding claims, wherein the binder does not comprise, in its uncured state a carboxylic acid.

9. Use of a mineral fiber product according to any of the preceding claims, wherein the binder comprises, in its uncured state: a component (ii) in the form of one or more compounds selected from the group consisting of ammonia and/or amines, such as piperazine, polyamine such as hexamethylenediamine, m-xylylenediamine, diethylenetriamine, triethylenetetramine, tetraethylenepentamine, monoethanolamine, diethanolamine, and/or triethanolamine.

10. Use of a mineral fiber product according to any of the preceding claims, wherein the binder further comprises, in its uncured state urea.

11. Use of a mineral fiber product according to any of the preceding claims, wherein the binder further comprises, in its uncured state hypophosphorous acid.

**Patentansprüche**

1. Verwendung eines Mineralfaserprodukts, umfassend Mineralfasern, die durch ein organisches, formaldehydfreies Bindemittel umfassend Kohlenhydrat in ungehärtetem Zustand gebunden sind, wobei beim Erwärmen des Mineralwolleprodukts auf eine Temperatur von etwa 225°C weniger als 25 g VOC (flüchtiger organischer Gehalt) pro kg Bindemittel ausgast,
wobei das Bindemittel ferner in ungehärtetem Zustand umfasst:

eine Komponente (i) in Form einer oder mehrerer Verbindungen ausgewählt aus

- Verbindungen der folgenden Formel und Salzen davon:

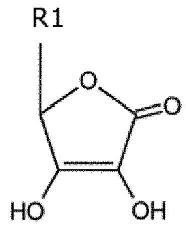

worin R1 H, Alkyl, Monohydroxyalkyl, Dihydroxyalkyl, Polyhydroxyalkyl, Alkylen, Alkoxy, Amin entspricht;
- Verbindungen der folgenden Formel und Salzen davon:

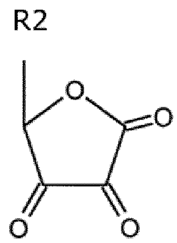

worin R2 H, Alkyl, Monohydroxyalkyl, Dihydroxyalkyl, Polyhydroxyalkyl, Alkylen, Alkoxy, Amin entspricht;

eine Komponente (ii) in Form einer oder mehrerer Verbindungen ausgewählt aus der Gruppe von Ammoniak, Aminen oder Salzen davon;
und/oder
wobei das Bindemittel ferner in ungehärtetem Zustand umfasst: eine Komponente (iii) in Form einer oder mehrerer Verbindungen ausgewählt aus Sulfaminsäure, Derivaten von Sulfaminsäure oder irgendeinem Salz davon, bei Temperaturen über 150°C, wie z.B. über 175°C, wie z.B. über 200°C und unter der maximalen Betriebstemperatur von 300°C, wie z.B. 250°C.

2. Verwendung eines Mineralfaserprodukts nach Anspruch 1, wobei das Bindemittel Kohlenhydrat in ungehärtetem Zustand in einer Menge von 70 bis 95 Gew.-% des gesamten Feststoffgehalts der Bindemittelkomponente umfasst.

3. Verwendung eines Mineralfaserprodukts nach Anspruch 1, wobei das Bindemittel Kohlenhydrat in ungehärtetem Zustand in einer Menge von 86 bis 95 Gew.-% des gesamten Feststoffgehalts der Bindemittelkomponente umfasst.

4. Verwendung eines Mineralfaserprodukts nach irgendeinem der vorhergehenden Ansprüche, wobei das Kohlenhydrat ausgewählt ist aus der Gruppe bestehend aus Hexose, wie z.B. Dextrose, Fructose, Pentose, wie z.B. Xylose, und/oder Saccharose, Glucosesirup.

5. Verwendung eines Mineralfaserprodukts nach irgendeinem der vorhergehenden Ansprüche, wobei das Kohlenhydrat aus der Gruppe von Dextrose und/oder einem Glucosesirup mit einem Dextroseäquivalent (DE)-Wert von 85 bis 99 ausgewählt ist.

6. Verwendung eines Mineralfaserprodukts nach Anspruch 1-4, wobei das Kohlenhydrat ein Glucosesirup mit einem Dextroseäquivalent (DE)-Wert von 15 bis 50 ist.

7. Verwendung eines Mineralfaserprodukts nach irgendeinem der Ansprüche 1 bis 4, wobei das Kohlenhydrat ein Kohlenhydrat mit einem Dextroseäquivalent (DE)-Wert von 50 bis 85 ist.

8. Verwendung eines Mineralfaserprodukts nach irgendeinem der vorhergehenden Ansprüche, wobei das Bindemittel in ungehärtetem Zustand keine Carbonsäure enthält.

9. Verwendung eines Mineralfaserprodukts nach irgendeinem der vorhergehenden Ansprüche, wobei das Bindemittel in ungehärtetem Zustand umfasst: eine Komponente (ii) in Form einer oder mehrerer Verbindungen ausgewählt aus der Gruppe bestehend aus Ammoniak und/oder Aminen, wie z.B. Piperazin, Polyamin, wie z.B. Hexamethylendiamin, m-Xylylendiamin, Diethylentriamin, Triethylentetramin, Tetraethylenpentamin, Monoethanolamin, Diethanolamin und/oder Triethanolamin.

10. Verwendung eines Mineralfaserprodukts nach irgendeinem der vorhergehenden Ansprüche, wobei das Bindemittel ferner in ungehärtetem Zustand Harnstoff enthält.

11. Verwendung eines Mineralfaserprodukts nach irgendeinem der vorhergehenden Ansprüche, wobei das Bindemittel ferner in ungehärtetem Zustand hypophosphorige Säure enthält.

**Revendications**

1. Utilisation d'un produit en fibres minérales comprenant des fibres minérales liées par un liant exempt de formaldéhyde organique comprenant un hydrate de carbone dans son état non durci, où le chauffage du produit en laine minérale à une température d'environ 225°C a un dégagement gazeux inférieur à 25 g de COV (composés organiques volatils) par kg de liant,
dans laquelle le liant comprend en outre, dans son état non durci :

un composant (i) sous la forme d'un ou plusieurs composés choisis parmi

- les composés de la formule suivante, et n'importe lesquels de leurs sels :

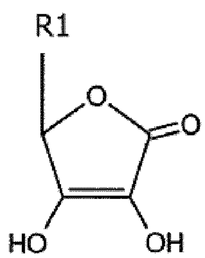

dans laquelle R1 correspond à H, alkyle, monohydroxyalkyle, dihydroxyalkyle, polyhydroxyalkyle, alkylène, alkoxy, amine ;
- les composés de la formule suivante, et n'importe lesquels de leurs sels :

R2

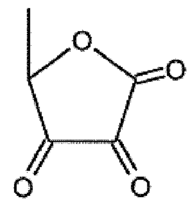

dans laquelle R2 correspond à H, alkyle, monohydroxyalkyle, dihydroxyalkyle, polyhydroxyalkyle, alkylène, alkoxy, amine ;
un composant (ii) sous la forme d'un ou plusieurs composés choisis dans l'ensemble constitué par l'ammoniac, les amines, et n'importe lesquels de leurs sels ;
et/ou
dans laquelle le liant comprend en outre, dans son état non durci : un composant (iii) sous la forme d'un ou plusieurs composés choisis parmi l'acide sulfamique, les dérivés d'acide sulfamique, et n'importe lesquels de leurs sels,
à des températures supérieures à 150°C, telles que supérieures à 175°C, telles que supérieures à 200°C, et inférieures à la température de service maximale de 300°C, telle que 250°C.

2. Utilisation d'un produit en fibres minérales selon la revendication 1, où le liant comprend un hydrate de carbone dans son état non durci à raison de 70 à 95 % en poids des solides totaux des composants du liant.

3. Utilisation d'un produit en fibres minérales selon la revendication 1, où le liant comprend un hydrate de carbone dans son état non durci à raison de 86 à 95 % en poids des solides totaux des composants du liant.

4. Utilisation d'un produit en fibres minérales selon l'une quelconque des revendications précédentes, où l'hydrate de carbone est choisi dans l'ensemble constitué par les hexoses, tels que le dextrose, le fructose, les pentoses tels que le xylose et/ou le saccharose, le sirop de glucose.

5. Utilisation d'un produit en fibres minérales selon l'une quelconque des revendications précédentes, où l'hydrate de carbone est choisi dans l'ensemble constitué par le dextrose et/ou un sirop de glucose ayant une valeur d'équivalent dextrose (DE) de 85 à 99.

6. Utilisation d'un produit en fibres minérales selon les revendications 1 à 4, où l'hydrate de carbone est un sirop de glucose ayant une valeur d'équivalent dextrose (DE) de 15 à 50.

7. Utilisation d'un produit en fibres minérales selon les revendications 1 à 4, où l'hydrate de carbone est un hydrate de carbone ayant une valeur d'équivalent dextrose (DE) de 50 à 85.

8. Utilisation d'un produit en fibres minérales selon l'une quelconque des revendications précédentes, où le liant ne comprend pas, dans son état non durci, d'acide carboxylique.

9. Utilisation d'un produit en fibres minérales selon l'une quelconque des revendications précédentes, où le liant comprend, dans son état non durci : un composant (ii) sous la forme d'un ou plusieurs composés choisis dans l'ensemble constitué par l'ammoniac et/ou les amines, telles que la pipérazine, les polyamines telles que l'hexaméthylènediamine, la m-xylylènediamine, la diéthylène-triamine, la triéthylènetétramine, la tétraéthylènepentamine, la monoéthanolamine, la diéthanolamine, et/ou la triéthanolamine.

10. Utilisation d'un produit en fibres minérales selon l'une quelconque des revendications précédentes, où le liant comprend en outre, dans son état non durci, de l'urée.

11. Utilisation d'un produit en fibres minérales selon l'une quelconque des revendications précédentes, où le liant comprend en outre, dans son état non durci, de l'acide hypophosphoreux.

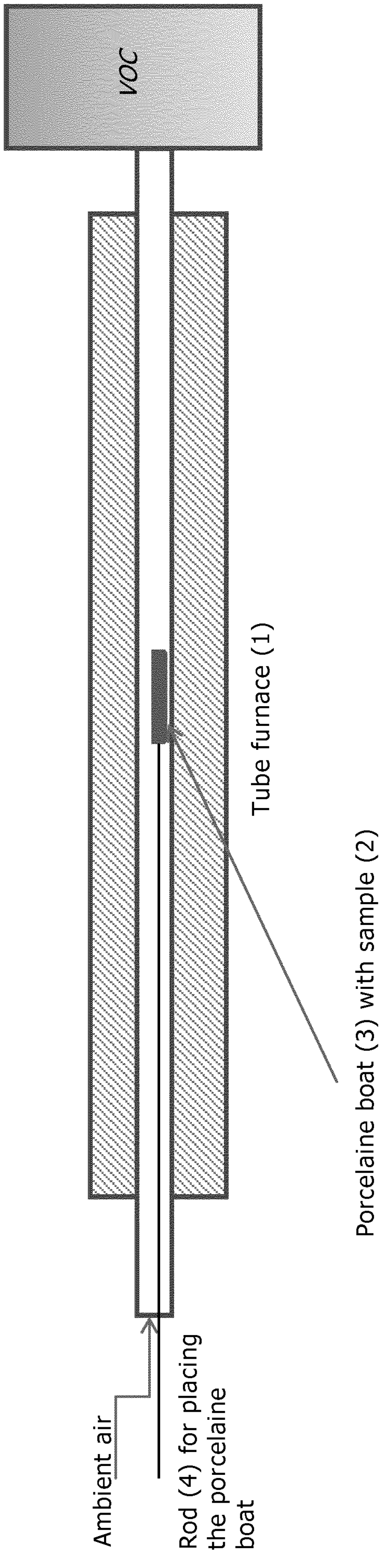
VOC
Tube furnace (1)
Porcelaine boat (3) with sample (2)
Ambient air
Rod (4) for placing the porcelaine boat

Figure 1

Figure 2

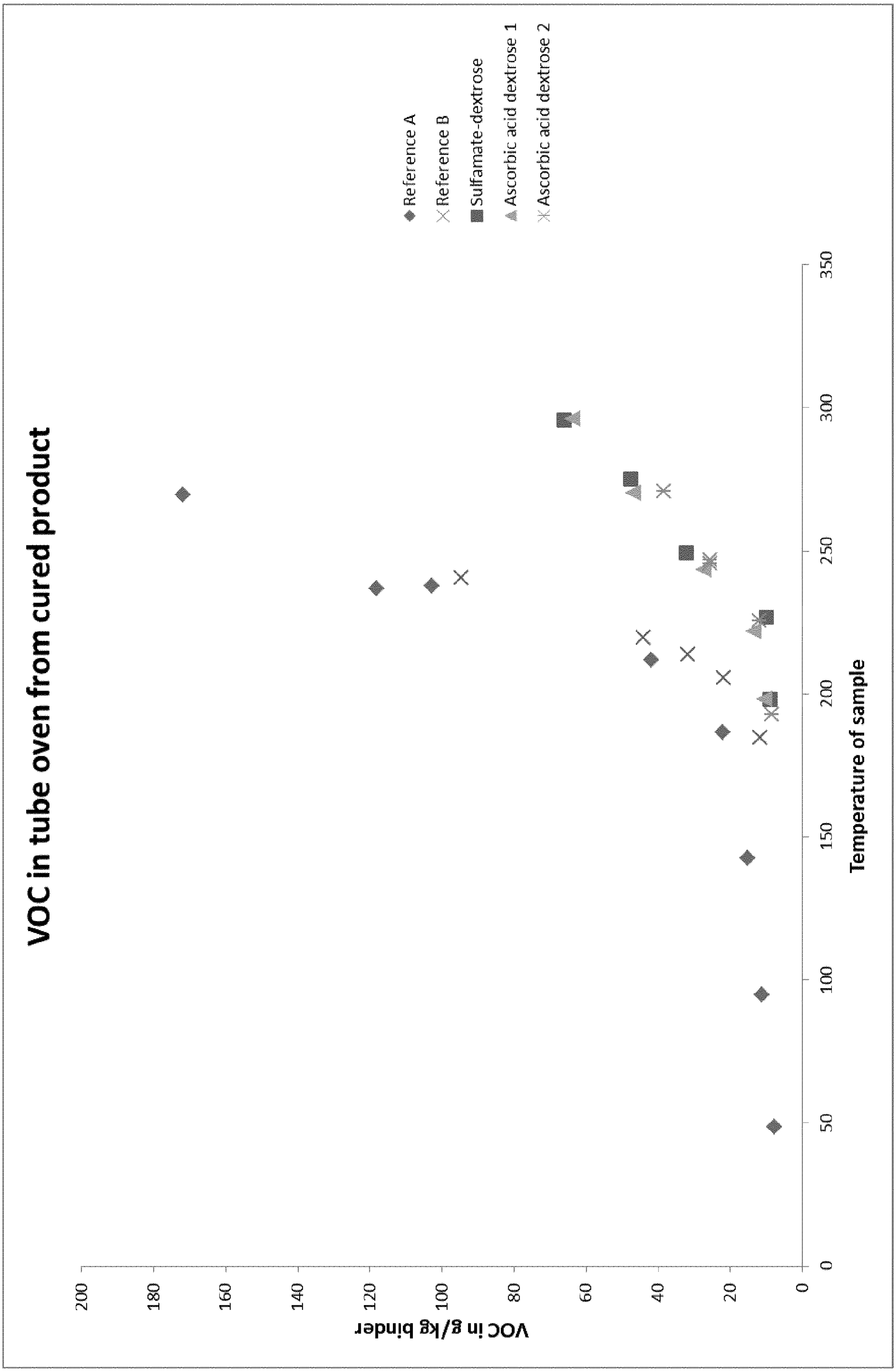
VOC in tube oven from cured product
VOC in g/kg binder
Temperature of sample
Reference A
Reference B
Sulfamate-dextrose
Ascorbic acid dextrose 1
Ascorbic acid dextrose 2
0
20
40
60
80
100
120
140
160
180
200
0
50
100
150
200
250
300
350

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 583086 A
- EP 990727 A
- EP 1741726 A
- US 5318990 A
- US 20070173588 A
- WO 9936368 A
- WO 0105725 A
- WO 0196460 A
- WO 0206178 A
- WO 2004007615 A
- WO 2006061249 A
- WO 2008023032 A
- WO 2009019235 A
- WO 2011044490 A
- WO 2013179323 A
- WO 2010106181 A